Europäisches Patentamt

European Patent Office

Office européen des brevets

(11) Veröffentlichungsnummer: **0 444 550 A2**

## (12) EUROPÄISCHE PATENTANMELDUNG

(21) Anmeldenummer: 91102675.5

(22) Anmeldetag: 23.02.91

(51) Int. Cl.5: **B23K 37/06**, //B23K26/14

(30) Priorität: 02.03.90 DE 4006511

(43) Veröffentlichungstag der Anmeldung:
04.09.91 Patentblatt 91/36

(84) Benannte Vertragsstaaten:
**DE FR GB IT**

(71) Anmelder: **Fried. Krupp Gesellschaft mit**
beschränkter Haftung
**Altendorfer Strasse 103**
**W-4300 Essen 1(DE)**

(72) Erfinder: **Müller, Reinhard, Dr.-Ing.**
**Klapperstrasse 97**
**W-4300 Essen 14(DE)**

(54) Einrichtung zum Zuführen pulverförmiger Zusatzwerkstoffe in den Bereich einer Schweissstelle.

(57) Es ist bekannt, pulverförmige Zusatzwerkstoffe durch ein unter Einwirkung eines Fördergases stehendes Förderrohr in den Bereich einer Schweißstelle zuzuführen, die im Wirkbereich einer Schweißeinheit liegt, wobei das Förderrohr in der Nähe der Schweißstelle geradlinig ausgebildet ist und dort bezüglich der Wirkachse der Schweißeinheit geneigt verläuft.

Zur Verbesserung der Zielgenauigkeit insbesondere auch bei kleinflächigen Schweißstellen wird eine Zuführeinrichtung mit folgender Ausbildung vorgeschlagen:

Das Förderrohr (8) weist in seinem der Schweißstelle (9) zugewandten Endbereich (8b) einen Innendurchmesser (d) von allenfalls 1,2 mm auf. Die Rauhtiefe der Innenfläche (8d) des Endbereichs (8b) ist im Vergleich zur mittleren Korngröße der Zusatzwerkstoffe klein.

Die Länge des Endbereichs (8b) macht zumindest das Fünfzig-fache der Größe seines Innendurchmesses (d) aus, wobei dieser zumindest um den Faktor 3 größer ist als die in den Zusatzwerkstoffen vorliegende größte Korngröße.

FIG.1a

Die Erfindung betrifft eine Einrichtung zum Zuführen pulverförmiger Zusatzwerkstoffe durch ein unter Einwirkung eines Fördergases stehendes Förderrohr in den Bereich einer Schweißstelle, die im Wirkbereich einer Schweißeinheit liegt, wobei das Förderrohr in der Nähe der Schweißstelle geradlinig ausgebildet ist und dort bezüglich der Wirkachse der Schweißeinheit geneigt verläuft.

Aus der Druckschrift EP-B 1-0173654 ist eine Einrichtung der eingangs erwähnten Gattung bekannt, deren als Lasereinheit ausgebildete Schweißeinheit einen auf die Schweißstelle gerichteten Laserstrahl erzeugt. Die von der Längsachse des Laserstrahls gebildete Wirkachse kann dabei lotrecht oder geneigt zur Schweißstelle angeordnet sein, wobei die Zuführung der pulverförmigen Zusatzwerkstoffe in der Weise erfolgt, daß der zu erwärmende Oberflächenbereich durch die herunterfallenden Pulverteilchen hindurch bestrahlt wird; ggf. ist der vom Laserstrahl erfaßte Oberflächenbereich größer als der in diesem liegende Ablagerungsbereich der Zusatzwerkstoffe.

Die in Rede stehende Vorveröffentlichung enthält allerdings keinen Hinweis darauf, welche Abmessung der Laserstrahl aufweist und auf welche Weise die gezielte Ablagerung der Zusatzwerkstoffe innerhalb des vom Laserstrahl erfaßten Oberflächenbereichs herbeigeführt wird.

Der Erfindung liegt die Aufgabe zugrunde, eine Zuführeinrichtung für pulverförmige Zusatzwerkstoffe anzugeben, die es ermöglicht, vor allem dünnwandige Werkstücke mit Wandstärken im Millimeterbereich und mit den damit im Zusammenhang stehenden dünnen Nahtfugen bei möglichst guter Ausnutzung der zugeführten Zusatzwerkstoffe zu schweißen: Es soll also ein möglichst großer Anteil der Zusatzwerkstoffe vom Laserstrahl erfaßt und zur Bildung der Schweißnaht herangezogen werden.

Die Erfindung soll insbesondere beim Laserschweißen zur Anwendung kommen; sie soll jedoch auch beim WIG-, MIG/MAG- bzw. Plasma-Schweißen einsetzbar sein.

Diese Aufgabe wird durch eine Einrichtung mit den Merkmalen des Anspruchs 1 gelöst. Der Erfindung liegt dabei der Gedanke zugrunde, durch geeignete Ausgestaltung der Zuführung für die Zusatzwerkstoffe in bezug auf die Schweißstelle eine Zielgenauigkeit zu erreichen, die im Millimeterbereich liegt. Dies läßt sich insbesondere dadurch erreichen, daß die Innenfläche des Endbereichs des Förderrohres für die Zusatzwerkstoffe besonders glatt ausgebildet ist, d. h. eine im Vergleich zur mittleren Korngröße der Zusatzwerkstoffe kleine Rauhtiefe aufweist, daß die Länge des genannten Endbereichs zumindest das Fünfzig-fache der Größe seines Innendurchmessers ausmacht und dieser zumindest um den Faktor 3 größer ist als die in den Zusatzwerkstoffen vorliegende größte Korngröße.

Die Wirkungsweise der Zuführeinrichtung läßt sich dabei ggf. dadurch weiter verbessern, daß die Länge des (besonders glatt ausgebildeten) Endbereichs zumindest das Einhundert-fache der Größe seines Innendurchmessers ausmacht.

Die geforderte geringe Rauhtiefe der Innenfläche des Förderrohrs sollte allenfalls in der Größenordnung von wenigen Mikrometern liegen. Vorzugsweise ist die Innenfläche des Endbereichs poliert (Anspruch 2); ihre Rauhtiefe liegt dabei unterhalb von etwa 0,4 Mikrometer.

Die Führungsgenauigkeit läßt sich durch geeignete Bemessung der Korngröße der Zusatzwerkstoffe im Verhältnis zum Innendurchmesser des Endbereichs weiter verbessern. Die Zusatzwerkstoffe sollten dabei derart beschaffen sein, daß der Innendurchmesser des Endbereichs zumindest um den Faktor 5 (vorzugsweise zumindest um den Faktor 5 bis 10) größer ist als die größte Korngröße (Anspruch 3).

Damit das Förderrohr die angestrebten günstigen Führungseigenschaften auch über eine längere Betriebsdauer beibehält, sollte zumindest sein Endbereich aus einem besonders verschleißfesten Werkstoff bestehen; als geeigneter Werkstoff kommt insbesondere Keramik in Frage (Anspruch 4).

Abhängig insbesondere vom Innendurchmesser des Förderrohres und von der Größe der Schweißstelle sollte der Abstand zwischen dieser und dem Austrittsquerschnitt des Förderrohres höchstens 20 Millimeter - vorzugsweise höchstens 15 Millimeter - betragen (Anspruch 5).

Der Erfindungsgegenstand kann dadurch vorteilhaft ausgestaltet sein, daß zumindest innerhalb des Endbereichs des Förderrohres ein elektrostatisches Feld vorhanden ist und die durch dieses hindurch bewegten Zusatzwerkstoffe eine gleichartige elektrostatische Aufladung aufweisen (Anspruch 6). Eine derartige Ausgestaltung führt zu einer in Richtung auf die Rohrachse gerichteten Abstoßung der Zusatzwerkstoffe innerhalb des Förderrohres. Auf diese Weise läßt sich das Ausmaß unerwünschter Querbewegungen innerhalb des Förderrohres herabsetzen mit der Folge, daß der aus diesem austretende Förderstrom eine größere Zielgenauigkeit aufweist.

Falls ferromagnetische Zusatzwerkstoffe zum Einsatz kommen, ist der Endbereich des Förderrohres zumindest auf einem Teil seiner Längserstreckung mit einer Magneteinheit ausgestattet, mittels deren auf die Zusatzwerkstoffe einwirkenden Magnetfeld letztere in Richtung auf die Längserstreckung des Endbereichs ausrichtbar sind (Anspruch 7); die Magneteinheit sollte sich dabei zumindest bis in die Nähe des Förderrohr-Austrittsquerschnitts erstrecken. Vorzugsweise besteht die Magneteinheit aus einem den Endbereich umschließenden Elektromagneten (Anspruch 8); dieser kann - abhängig von den Einsatzbedingungen - in der Weise ausgestaltet sein, daß er ein permanentes, pulsierendes oder wechselndes Magnetfeld erzeugt, dessen Achse parallel zum Förderrohr ausgerichtet ist.

Unter Einwirkung des von der Magneteinheit erzeugten Magnetfeldes lassen sich die Zusatzwerkstoffe fadenförmig ausrichten und somit der Schweißstelle konzentriert und mit hoher Zielgenauigkeit zuführen. Durch geeignete Anpassung der Magneteinheit insbesondere an die Ausgestaltung des Förderrohres und die Eigenschaften der Zusatzwerkstoffe (d. h. insbesondere durch geeignete Bemessung des innerhalb des Förderrohres wirksamen Magnetfeldes) läßt sich die Zielgenauigkeit ggf. soweit verbessern, daß der Abstand zwischen dem Austrittsquerschnitt des Förderrohres und der Schweißstelle erheblich größer sein kann als zuvor angegeben (vgl. Anspruch 5); abhängig von den übrigen Arbeitsbedingungen kann der Abstand auch Werte oberhalb von 40 bis 50 mm annehmen.

Die Führungseigenschaften des Förderrohres lassen sich ggf. dadurch verbessern, daß zumindest ein dem geradlinigen Teil des Endbereichs vorausgehender Abschnitt des Förderrohres eine durchgehende, die gleichmäßige Ausrichtung der Zusatzwerkstoffe unterstützende Krümmung aufweist (Anspruch 9). Diese führt dazu, daß sich die Zusatzwerkstoffe unter Einwirkung der Fliehkraft an den bezüglich des Krümmungsmittelpunktes außenliegenden Teil der Innenfläche anlegen und dadurch unerwünschte Querbewegungen innerhalb des Förderrohres erschwert werden.

Der zuvor angesprochene Förderrohrabschnitt weist zweckmäßig eine derartige Krümmung auf, die eine Radialbeschleunigung der Zusatzwerkstoffe zwischen 1 bis 20 g zur Folge hat (Anspruch 10). Die Ausbildung gemäß Anspruch 9 und/oder 10 weist die erwähnten vorteilhaften Eigenschaften insbesondere dann auf, wenn sie mit einer Magneteinheit (Anspruch 7 und/oder 8) zusammenwirkt. Gegebenenfalls läßt sich die Führungseigenschaft des Förderrohrs jedoch bereits dadurch verbessern, daß der betreffende Förderrohrabschnitt - ohne Einwirkung eines Magnetfeldes - in der erwähnten Weise gekrümmt ist.

Eine Weiterbildung des Erfindungsgegenstandes ist dadurch gekennzeichnet, daß der Endbereich des Förderrohres zumindest auf einem Teil seiner Längserstreckung von einem Gaszuführrohr umschlossen ist (Anspruch 11).

Das Gaszuführrohr ermöglicht es, die Schweißstelle zur Beeinflussung des Schweißvorgangs (beispielsweise: Begrenzung der Bildung von Schweißplasma) mit einem Arbeitsgas zu beaufschlagen. Beim Lichtbogenschweißen dient das Gaszuführrohr der Erzeugung eines Schutzgaspolsters; das Fördergas sollte dabei dieselbe Zusammensetzung aufweisen wie das Schutzgas.

Die Erfindung wird nachfolgend anhand in der Zeichnung dargestellter Ausführungsbeispiele im einzelnen erläutert.

Es zeigen:

| | |
|---|---|
| Fig. 1a | schematisiert teilweise im Schnitt den Aufbau einer Zuführeinrichtung, |
| Fig. 1b | eine Teilansicht gemäß Linie Ia-Ia in Fig. 1a, |
| Fig. 1c, d | in vergrößerter Darstellung einen Schnitt nach Linie Ic-Ic bzw. Id-Id in Fig. 1a, |
| Fig. 2 | einen Teilschnitt im Bereich der Schweißstelle durch den Endbereich eines Förderrohres, der von einem Gaszuführrohr umschlossen ist, |
| Fig. 3 | eine Teilansicht des geradlinigen Endbereichs eines Förderrohres, welcher auf einem Teil seiner Längserstreckung mit einer Magneteinheit ausgestattet ist, |
| Fig. 4a | schematisiert eine Teilansicht einer Zuführeinrichtung, die beim WIG-Schweißen zur Anwendung kommt, |
| Fig. 4b, c | in vergrößerter Stellung einen Schnitt nach Linie IVb-IVb bzw. IVc-IVc in Fig. 4a, |
| Fig. 5 | eine Darstellung der Gestalt des Förderstromes, der sich beim Austritt aus einem Keramikrohr mit handelsüblicher Rauhtiefe bildet, |
| Fig. 6 | in gegenüber Fig. 5 vergrößertem Maßstab die Ausbildung eines Förderstromes, der sich beim Austritt aus einem Keramikrohr mit polierter Innenfläche bildet, |
| Fig. 7 | in gegenüber Fig. 5 vergrößertem Maßstab die Ausbildung eines im wesentlichen fadenförmigen Förderstromes, der sich mittels eines auf ferromagnetische Zusatzwerkstoffe einwirkenden Magnetfeldes erzeugen läßt. |

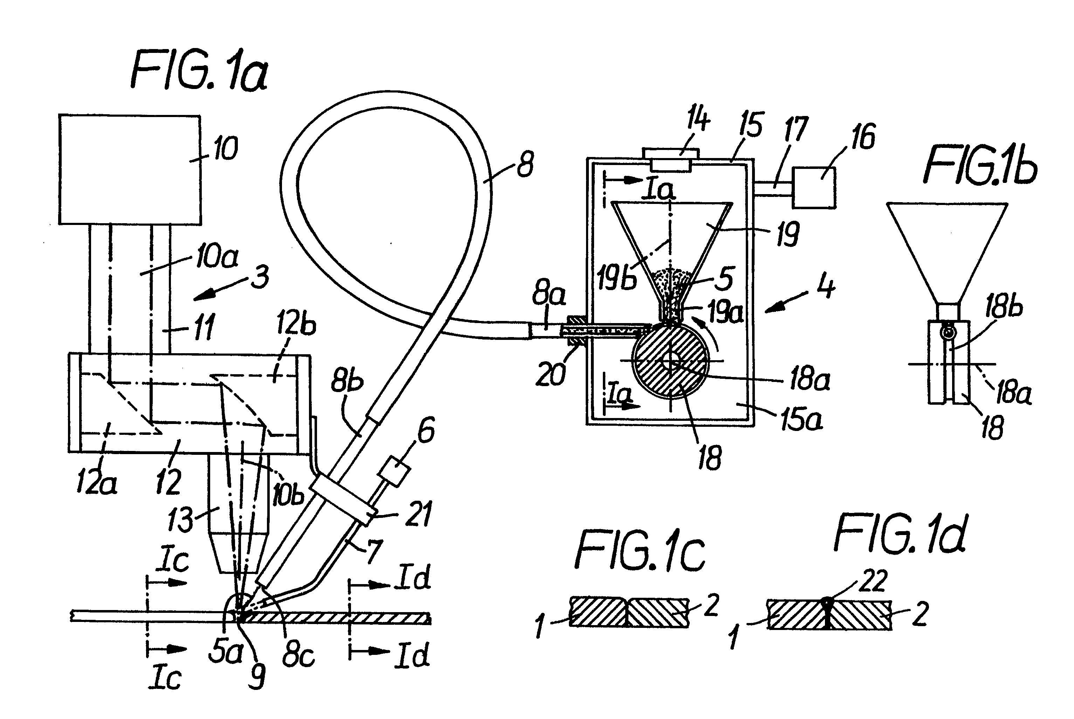

Die in Fig. 1a und b dargestellte Anordnung, mittels der sich dünne Metallbleche 1 und 2 miteinander verschweißen lassen, weist die folgenden Hauptbestandteile auf: Eine Lasereinheit 3, eine Dosiereinheit 4 für pulverförmige Zusatzwerkstoffe 5, ein an eine Arbeitsgas-Quelle 6 angeschlossenes Gaszuführrohr 7 und ein Förderrohr 8, über welches die der Dosiereinheit 4 entnommenen Zusatzwerkstoffe 5 dem Bereich der Schweißstelle 9 zuführbar sind. Die Lasereinheit 3 setzt sich aus dem eigentlichen Laser 10, dem Laserstrahl-Führungsrohr 11, dem Arbeitskopf 12 und dem Schweißadapter 13 zusammen. Der aus dem Laser 10 austretende Laserstrahl 10a wird über im Arbeitskopf angeordnete Umlenkkörper 12a, 12b umgelenkt und auf die Schweißstelle 9 fokussiert; die Achse 10b des aus dem Schweißadapter austretenden Laserstrahls ist dabei lotrecht zur Ebene der Metallbleche 1 und 2 ausgerichtet.

Die Dosiereinheit 4 weist ein mit einem Deckel 14 verschlossenes Gehäuse 15 auf, dessen Innenraum 15a über eine Fördergas-Quelle 16 mittels einer Leitung 17 mit Fördergas (beispielsweise Helium) beaufschlagt werden kann.

Innerhalb des Gehäuses 15 ist über eine ortsfeste Achse 18a ein Dosierrad 18 drehbar gehalten, das mittels eines nicht dargestellten Antriebs im Gegenuhrzeigersinn bewegt werden kann. Der als Ringnut 18b ausgebildete Mittenbereich des Dosierrades liegt unterhalb der Austrittsöffnung 19a eines mit den pulverförmigen Zusatzwerkstoffen gefüllten Trichters 19. Nach Abschalten der Fördergas-Quelle 16 und Öffnen des Deckels 14 kann die Füllung des Trichters 19 ergänzt werden. Der Vorderbereich 8a des Förderrohres ragt unter Bildung einer Dichtstelle 20 in das Gehäuse 4 hinein und endet - in Umlaufrichtung des Dosierrrades 18 gesehen - hinter dem Trichter 19 in der Nähe der Ringnut 18b.

Bei der in Rede stehenden Ausführungsform ist der Vorderbereich 8a senkrecht zur Trichterachse 19b angeordnet; er kann jedoch bezüglich einer gedachten Horizontalen auch nach unten geneigt sein.

Der der Schweißstelle 9 zugewandte Endbereich 8b des Förderrohres ist geradlinig ausgebildet und - ebenso wie das Gaszuführrohr 7 - über eine Halterung 21 seitlich am Arbeitskopf 12 befestigt.

Die Neigung des Endbereichs 8b (sie verläuft bezüglich der Laserstrahlachse 10b spitzwinklig) ist dabei derart gewählt, daß der den Austrittsquerschnitt 8c verlassende Förderstrom 5a im Bereich der Laserstrahlachse 10b auf die Schweißstelle 9 auftrifft und dort unter Bildung einer Schweißnaht 22 aufgeschmolzen wird.

Während des Schweißvorgangs wird der Bereich der Schweißstelle 9 zur Begrenzung des Schweißplasmas und/oder zur Abschirmung gegen die Umgebung über das Gaszuführrohr 7 ebenfalls mit Helium beaufschlagt.

Dem Grundgedanken der Erfindung entsprechend beträgt die Länge des aus Keramik ($Al_2O_3$) bestehenden Endbereichs 8b, der einen Innendurchmesser von 0,6 mm aufweist, 50 mm.

Bei einer Korngröße der zugeführten Zusatzwerkstoffe zwischen 40 und 64 Mikrometer ist der genannte Innendurchmesser etwa um den Faktor 10 größer als die vorhandene größte Korngröße.

Die durch Polieren geglättete Innenfläche des Endbereichs weist eine Rauhtiefe auf, die im Vergleich zur mittleren Korngröße der Zusatzwerkstoffe klein ist; selbst die kleinsten Korndurchmesser sind um den Faktor 100 größer als die nach dem Polieren vorliegende Rauhtiefe (in der Größenordnung von 0,4 Mikrometer) der Innenfläche des Endbereichs 8b.

Die Figuren 1c und 1d zeigen die Lage der für den Schweißvorgang vorbereiteten dünnen Metallbleche 1, 2 bzw. die durch die Schweißnaht 22 zwischen den Metallblechen hergestellte Verbindung.

Mit den zuvor geschilderten Maßnahmen läßt sich der aus dem Förderrohr 8 austretende Förderstrom 5a soweit konzentrieren, daß sein Durchmesser sich auf dem Wege zur Schweißstelle 9 nur geringfügig vergrößert; dabei sollte der Abstand des Austrittsquerschnitts 8c von der Schweißstelle 9 nach Möglichkeit nicht größer als 20 mm sein.

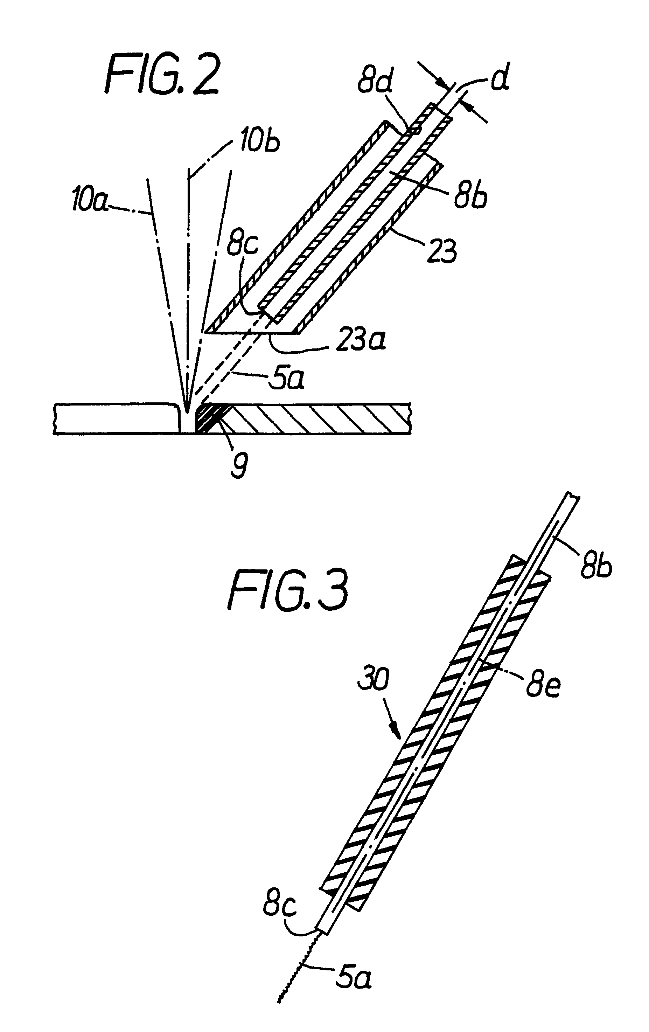

Abweichend von der Ausführungsform gemäß Fig. 1a kann der Erfindungsgegenstand auch in der Weise ausgebildet sein, daß der Endbereich 8b des Förderrohres 8 (mit dem Innendurchmesser d und der glatt ausgebildeten Innenfläche 8d) zumindest auf einem Teil seiner Längserstreckung von einem Gaszuführrohr 23 umschlossen ist (Fig. 2); dessen der Schweißstelle 9 zugewandte Austrittsöffnung 23a liegt in dem dargestellten Ausführungsbeispiel der Schweißstelle geringfügig näher als der Austrittsquerschnitt 8c.

Das aus dem Gaszuführrohr 23 austretende Schutzgas weist zweckmäßig dieselbe Zusammensetzung auf wie das Fördergas für die Zusatzwerkstoffe.

Nach Möglichkeit sollte der Neigungswinkel zwischen der Laserstrahlachse 10b und dem Endbereich 8b möglichst klein, also spitzwinklig sein.

Falls die der Schweißstelle zuzuführenden Zusatzwerkstoffe ferromagnetisch sind, läßt sich die mittels des Förderrohres erreichbare Zielgenauigkeit dadurch weiter verbessern, daß der Endbereich 8b auf einem Teil seiner Längserstreckung mit einem Elektromagneten 30 ausgestattet ist (Fig. 3). Dieser ist derart beschaffen, daß das von ihm ausgehende Magnetfeld im Innern des Endbereichs 8b parallel zu dessen Längserstreckung verlaufende Magnetlinien aufweist.

Unter Einwirkung dieses Magnetfeldes lassen sich die Zusatzwerkstoffe im Bereich der Förderrohrachse 8e konzentrieren, so daß das Ausmaß an Querbewegungen und Reibungsvorgängen innerhalb des Endbereichs 8b herabgesetzt wird.

Die in Rede stehende Ausführungsform ermöglicht es, die Zusatzwerkstoffe im wesentlichen als fadenförmigen Förderstrom 5a in Richtung auf die Schweißstelle austreten zu lassen.

Der Elektromagnet 30 kann erforderlichenfalls derart ausgestaltet sein, daß er ein permanentes, pulsierendes oder wechselndes Magnetfeld erzeugt. Die mittels des Förderrohres 8 erreichbare Zielgenauigkeit läßt sich bei der in Rede stehenden Ausführungsform (Fig. 3) ggf. dadurch weiter verbessern, daß abweichend von der Darstellung gemäß Fig. 1a - der Vorderbereich 8a unter Bildung einer durchgehenden stetigen Krümmung (also ohne die dargestellte Schleife) in den Endbereich 8b übergeht. Eine derartige Ausgestaltung des Förderrohres 8 hat zur Folge, daß die in den Vorderbereich 8a eintretenden Zusatzwerkstoffe unter Einwirkung der an ihnen angreifenden Fliehkraft an dem Teil der Innenfläche zur Anlage kommen, der bezüglich des Krümmungsmittelpunktes außen liegt, und dabei innerhalb des Förderrohres gleichmäßiger ausgerichtet werden. Der Übergang der Innenfläche des gekrümmten Förderrohrabschnitts zu derjenigen des geradlinigen Teils des Endbereichs sollte dabei ebenfalls besonders glatt und ohne Ansatz ausgebildet sein.

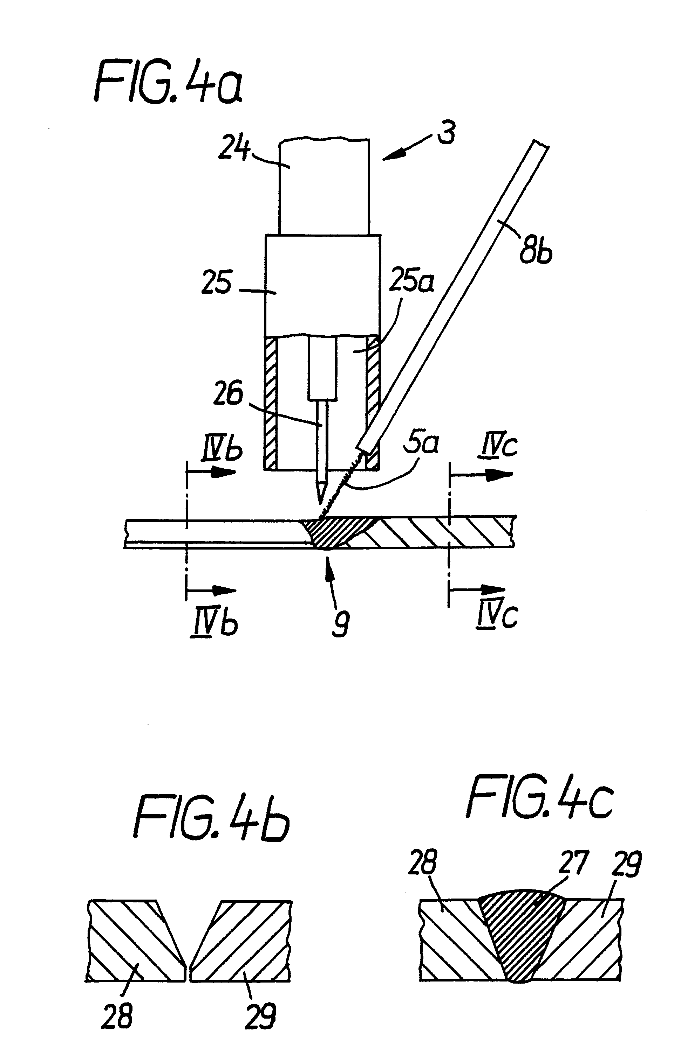

Die Figuren 4a bis c zeigen eine andere Ausbildung und Anwendungsmöglichkeit des Erfindungsgegenstandes. Das entsprechend ausgebildete Förderrohr mit dem geradlinigen Endbereich 8b ist dabei einer Schweißeinheit 3 zugeordnet, mittels der das Wolfram-Inertgas-Schweißverfahren (WIG) ausführbar ist. Die Schweißeinheit besteht in an sich bekannter Weise aus einem Gehäuse 24 und einem sich nach unten hin anschließenden Schweißadapter 25, in denen eine Wolframelektrode 26 höhenverstellbar gehalten ist. Über den Innenraum 25a des Schweißadapters kann während des Schweißvorgangs ein die Schweißstelle abschirmendes Inertgas (beispielsweise Argon oder Helium) zugeführt werden. Der aus dem Endbereich 8b austretende Förderstrom 5a an Zusatzwerkstoffen wird durch den zwischen der Wolframelektrode 26 und der Schweißstelle 9 gebildeten Lichtbogen unter Bildung einer Schweißnaht 27 aufgeschmolzen.

Die Fig. 4b und 4c zeigen die miteinander zu verbindenden Bleche 28, 29 vor Durchführung bzw. nach Abschluß des Schweißvorgangs.

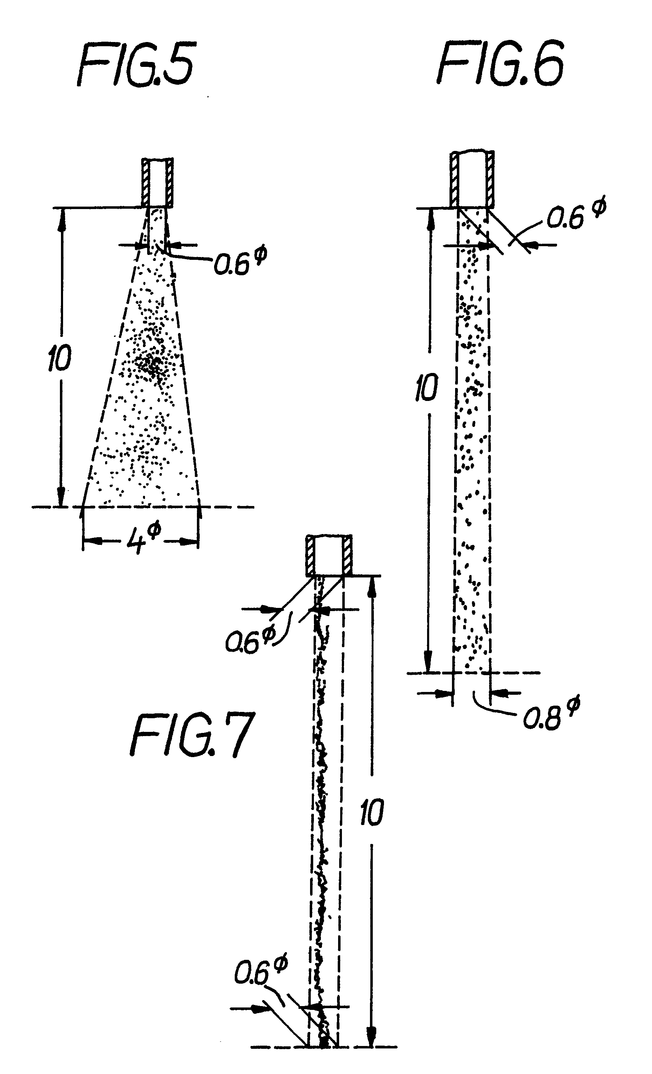

In welcher Weise sich die Zielgenauigkeit bei der Zuführung pulverförmiger Zusatzwerkstoffe verbessern läßt, wird nachfolgend anhand der Fig. 5 bis 7 erläutert; diese geben das Ergebnis konkreter Versuche wieder.

Fig. 5 zeigt die Ausbildung eines Förderstroms, welcher aus einem Keramik-Förderrohr mit handelsüblicher Rauhigkeit austritt, unter den weiteren Verfahrensbedingungen:

Korngröße der pulverförmigen Zusatzwerkstoffe: 40 bis 63 Mikrometer; spratzig

Massenstrom der austretenden Zusatzwerkstoffe: etwa 6,5 g/min.

Fördergas: Argon; 0,4 l/min. = 24 m/sec.

Fördergeschwindigkeit der Zusatzwerkstoffe : 3,3 bis 4,2 m/sec.

Innendurchmesser des Förderrohres: 0,6 mm.

Unter den zuvor genannten Versuchsbedingungen erweitert sich der aus dem Förderrohr austretende Förderstrom an Zusatzwerkstoffen in der Weise, daß er in einer Entfernung von 10 mm bereits einen Durchmesser von etwa 4 mm aufweist. Die von dem Förderstrom erfaßte Endfläche in 10 mm Entfernung ist also mehr als vierzigmal so groß wie der Austrittsquerschnitt des Förderrohres.

Fig. 6 läßt erkennen, daß sich der Durchmesser des austretenden Förderstroms - ausgehend wiederum von einem Innendurchmesser von 0,6 mm des Förderrohres - in einer Entfernung von 10 mm lediglich auf 0,8 mm vergrößert, falls die Innenfläche des aus Keramik bestehenden Förderrohres durch Polieren geglättet ist.

Die weiteren Versuchsbedingungen sind:

Korndurchmesser der zugeführten Zusatzwerkstoffe: 40 bis 63 Mikrometer, spratzig

Massenstrom der Zusatzwerkstoffe: etwa 12 g/min.

Fördergas: Argon; 0,5 l/min. = 30 m/sec.

Fördergeschwindigkeit der Zusatzwerkstoffe: 14,2 bis 17,0 m/sec.

Die Zielgenauigkeit läßt sich also erheblich verbessern, falls die Innenfläche des Zuführrohres eine Rauhtiefe aufweist, die im Vergleich zur mittleren Korngröße der zugeführten Zusatzwerkstoffe klein ist. Bei einer Rauhtiefe von 0,4 Mikrometer und einer (kleinsten) Korngröße von 40 Mikrometer beträgt das sich daraus ergebende Verhältnis (Rauhtiefe/Korngröße) l/100. Der Endquerschnitt des Förderstroms ist lediglich um den Faktor 1,8 größer als der Innendurchmesser des Förderrohres.

Fig. 7 läßt erkennen, daß sich durch Einwirkung eines geeigneten Magnetfeldes (vgl. dazu Fig. 3) auf ferromagnetische Zusatzwerkstoffe ein im wesentlichen fadenförmiger Förderstrom erzeugen läßt; das als Führungsorgan dienende Förderrohr ist dabei wie anhand Fig. 6 erläutert ausgebildet.

Weitere Versuchsbedingungen:

Korngröße der zugeführten Zusatzwerkstoffe: 40 bis 63 Mikrometer, spratzig

Massenstrom der Zusatzwerkstoffe: Etwa 12 g/min.

Fördergas: Argon; 0,5 1/min. = 30 m/sec.

Fördergeschwindigkeit der Einzelkörner bzw. Fäden der Zusatzwerkstoffe: 17,5 bis 18,2 bzw. 13,2 bis 14,0 m/sec.

Bedingt durch die im wesentlichen fadenförmige Ausbildung des aus dem Förderrohr austretenden Förderstroms läßt sich in einer Entfernung von 10 mm keine Veränderung des von den Zusatzwerkstoffen eingenommenen Querschnitts feststellen.

Die hier angesprochene Ausführungsform des Erfindungsgegenstandes gestattet es also, ferromagnetische Zusatzwerkstoffe zielgenau einer kleinflächigen Schweißstelle zuzuführen und damit im wesentlichen vollständig zur Bildung der Schweißnaht heranzuziehen.

Der mit der Erfindung erzielte Vorteil ist insbesondere darin zu sehen, daß auch verhältnismäßig dünnwandige Gegenstände in Fällen geschweißt werden können, in denen entsprechend bemessene Schweißdrähte nicht zur Verfügung stehen, einen erhöhten Kostenaufwand nach sich ziehen und/oder nicht mit der geforderten Genauigkeit verarbeitet werden können. Demgegenüber bereitet die Herstellung und die Verwendung pulverförmiger Zusatzwerkstoffe auch für die Anwendung bei kleinflächigen Schweißstellen keine Schwierigkeiten.

**Patentansprüche**

1. Einrichtung zum Zuführen pulverförmiger Zusatzwerkstoffe durch ein unter Einwirkung eines Fördergases stehendes Förderrohr in den Bereich einer Schweißstelle, die im Wirkbereich einer Schweißeinheit liegt, wobei das Förderrohr in der Nähe der Schweißstelle geradlinig ausgebildet ist und dort bezüglich der Wirkachse der Schweißeinheit geneigt verläuft, **dadurch gekennzeichnet,**
   - daß das Förderrohr (8) in seinem der Schweißstelle zugewandten Endbereich (8b) einen Innendurchmesser von allenfalls 1,2 Millimeter aufweist;
   - daß die Innenfläche (8d) des Endbereichs (8b) eine Rauhtiefe aufweist, die im Vergleich zur mittleren Korngröße der Zusatzwerkstoffe klein ist;
   - daß die Länge des Endbereichs (8b) zumindest das fünfzig-fache der Größe seines Innendurchmessers (d) ausmacht, und
   - daß der Innendurchmesser (d) des Endbereichs (8b) zumindest um den Faktor 3 größer ist als die in den Zusatzwerkstoffen vorliegende größte Korngröße.

2. Einrichtung nach Anspruch 1, dadurch gekennzeichnet, daß die Innenfläche (8d) des Endbereichs (8b) poliert ist.

3. Einrichtung nach zumindest einem der vorhergehenden Ansprüche, dadurch gekennzeichnet, daß der Innendurchmesser (d) des Endbereichs (8b) zumindest um den Faktor 5 größer ist als die größte Korngröße.

4. Einrichtung nach zumindest einem der vorhergehenden Ansprüche, dadurch gekennzeichnet, daß zumindest der Endbereich (8b) aus Keramik besteht.

5. Einrichtung nach zumindest einem der vorhergehenden Ansprüche, dadurch gekennzeichnet, daß der Abstand zwischen der Schweißstelle (9) und dem Austrittsquerschnitt (8c) des Förderrohres (8) höchstens 20 Millimeter, vorzugsweise höchstens 15 Millimeter, beträgt.

6. Einrichtung nach zumindest einem der vorhergehenden Ansprüche, dadurch gekennzeichnet, daß zumindest innerhalb des Endbereichs (8b) ein elektrostatisches Feld vorhanden ist und die durch dieses hindurch bewegten Zusatzwerkstoffe eine gleichartige elektrostatische Aufladung aufweisen.

7. Einrichtung nach zumindest einem der Ansprüche 1 bis 5, dadurch gekennzeichnet, daß der Endbereich (8b) zumindest auf einem Teil seiner Längserstreckung mit einer Magneteinheit (30) ausgestattet ist, mittels deren auf die ferromagnetischen Zusatzwerkstoffe einwirkenden Magnetfeld letztere in Richtung der Längserstreckung des Endbereichs ausrichtbar sind.

8. Einrichtung nach Anspruch 7, dadurch gekennzeichnet, daß die Magneteinheit (30) aus einem den Endbereich (8b) umschließenden Elektromagneten besteht.

9. Einrichtung nach zumindest einem der vorhergehenden Anprüche 7 und 8, dadurch gekennzeichnet, daß zumindest ein dem geradlinigen Teil des Endbereichs (8b) vorausgehender Abschnitt des Förderrohres (8) eine durchgehende, die gleichmäßige Ausrichtung der Zusatzwerkstoffe unterstützende Krümmung aufweist.

10. Einrichtung nach Anspruch 9, gekennzeichnet durch eine derartige Krümmung des Förderrohrabschnitts, die eine Radialbeschleunigung der Zusatzwerkstoffe zwischen 1 bis 20 g zur Folge hat.

11. Einrichtung nach zumindest einem der vorhergehenden Ansprüche, dadurch gekennzeichnet, daß der Endbereich (8b) zumindest auf einem Teil seiner Längserstreckung von einem Gaszuführrohr (23) umschlossen ist.

FIG.1a

FIG.1b

FIG.1c

FIG.1d

EP 0 444 550 A2

*FIG.2*

*FIG.3*

# FIG. 4a

# FIG. 4b

# FIG. 4c

# FIG.5

# FIG.6

0.6$^\phi$

10

4$^\phi$

0.6$^\phi$

10

0.8$^\phi$

# FIG.7

0.6$^\phi$

10

0.6$^\phi$